(19) Europäisches Patentamt
European Patent Office
Office européen des brevets

(11) EP 2 839 870 A1

(12) EUROPEAN PATENT APPLICATION

(43) Date of publication:
25.02.2015 Bulletin 2015/09

(51) Int Cl.:
B01D 1/00 (2006.01)          B01D 3/06 (2006.01)
C02F 1/14 (2006.01)

(21) Application number: 13181257.0

(22) Date of filing: 21.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Van Bogaert, Rafaël
9190 Stekene (BE)

(72) Inventor: Van Bogaert, Rafaël
9190 Stekene (BE)

(74) Representative: Jansen, Cornelis Marinus
V.O.
Johan de Wittlaan 7
2517 JR Den Haag (NL)

(54) **Distillation plant, desalinisation plant, and method of distilling water.**

(57)     This document describes a distillation plant for gaining distilled water, said plant comprising a plurality of N distillation panels (20), wherein $N \in \mathbb{N}$ and $N \geq 2$, wherein each distillation panel comprises: a water inlet (13) for receiving water to be processed; a solar thermal collector (17, 27) for converting the received water to steam; and a steam outlet (25). In the plant, for one or more n and $1 < n \leq N$: the $n^{th}$ distillation panel (20) of the N panels comprises a heat exchanger unit, which heat exchanger unit comprises a first channel for receiving steam (28) and a second channel connected to the water inlet (13) of the $n^{th}$ panel for receiving water to be processed; wherein the steam outlet (25) of the $(n-1)^{th}$ distillation panel (20) is connected to the first channel of the heat exchanger unit of the $n^{th}$ distillation panel; and wherein the first channel of the heat exchanger unit of the $n^{th}$ distillation panel further comprises a steam trap (30) at a second end downstream of said steam outlet of the $(n-1)^{th}$ distillation panel, for providing condensed distilled water to a water outlet (35).

FIG. 1

EP 2 839 870 A1

**Description**

<u>Technical field</u>

The invention relates generally to a distillation plant for gaining distilled water, said plant comprising a plurality of $N$ distillation panels, wherein $N \in \mathbb{N}$ and $N \geq 2$, wherein each distillation panel comprises a water inlet for receiving water to be processed, a solar thermal collector for converting the received water to steam, and a steam outlet. The invention further relates to a desalinisation plant comprising a distillation plant as described above, and to a method of distilling water.

<u>Background</u>

Despite the abundance of water available on earth, only approximately 2,5% of the available water is fresh water (i.e. water containing less than 500 ppm of dissolved salts). Most of that fresh water is available as ground water, and some of it is available as surface water in rivers and lakes. A known challenge to civilisation is the deficiency of fresh water in certain area's, such as for example arid area's, small or remote islands, or densely populated areas with an arid climate. The lack of drinking water or water for irrigation renders such areas to be dependent from external sources of water and/or food. This makes these areas prone to disaster, such as famine and disease.

For many of these areas, access to salt water reservoirs is available. Over the years, a large number of desalinisation processes and methods for gaining drinking water from alternative sources have been proposed for providing fresh water to such areas. However, water obtained from most of these processes is relatively expensive. For example, for obtaining a sufficient yield of fresh water, many desalinisation processes require the use of an external artificial energy source. Although for water use on a very small scale this may be acceptable, it certainly does not provide a structural long term solution for the provisioning of water for domestic purposes on a medium to large scale. Moreover, the cost of water gained by such a process is rather high and/or comes with at the additional disadvantages of the energy source (e.g. the use of heat from a factory or nuclear power plant). Another type of conventional purification methods, which is based on reverse osmosis, require adding of chemicals (e.g. bromides) and are therefore less environmental friendly.

Purification and desalinisation methods that do not rely on artificial power sources are also available. Many of these alternatives rely on using solar energy. Although such methods are promising in the sense that these may be applied and installed almost anywhere where they are needed, the yield of fresh water of such systems is relatively limited. Therefore, the total costs of installation and maintenance of desalinisation plants based on such methods still renders the fresh water produced by such methods to be relatively expensive and difficult to apply on a large scale for large communities.

<u>Brief summary</u>

It is an object of the invention to resolve the disadvantages of the prior art and to provide a distillation plant, desalinisation plant and method for distilling water, which uses natural power sources at a very high efficiency for gaining fresh water.

The invention, in accordance with a first aspect thereof, therefore provides for a distillation plant for gaining distilled water, said plant comprising a plurality of $N$ distillation panels, wherein $N \in \mathbb{N}$ and $N \geq 2$, wherein each distillation panel comprises: a water inlet for receiving water to be processed; a solar thermal collector for converting the received water to steam; and a steam outlet; wherein for one or more $n$ and $1 < n \leq N$ : the $n^{th}$ distillation panel of the $N$ panels comprises a heat exchanger unit, which heat exchanger unit comprises a first channel for receiving steam and a second channel connected to the water inlet of the $n^{th}$ panel for receiving water to be processed; wherein the steam outlet of the $(n-1)^{th}$ distillation panel is connected to the first channel of the heat exchanger unit of the $n^{th}$ distillation panel; and wherein the first channel of the heat exchanger unit of the $n^{th}$ distillation panel further comprises a steam trap at a second end downstream of said steam outlet of the $(n-1)^{th}$ distillation panel, for providing condensed distilled water to a water outlet.

In accordance with the principles of the invention, the efficiency of a distillation plant using solar thermal collectors can be greatly increased by regaining evaporation heat from the steam fraction obtained from a distillation panel to heat the water from the water inlet of a subsequent panel. In particular, using a steam trap at a downstream end of the heat exchanger unit within the subsequent distillation panel enables to regain the evaporation heat of the steam since the steam trap allows condensed water to be released to the distillation plant's fresh water outlet. In other words, the steam released into the first channel of the heat exchanger in the distillation panel condenses within the heat exchanger before it is released as condensed water through the steam trap. The evaporation heat, i.e. the difference in enthalpy between steam and water at the ruling boiling temperature and working pressure, will thus be made available to heat up the unprocessed water in the second channel of the heat exchanger unit.

In the ideal case, the heat received through the heat exchanger unit within the subsequent distillation panel will be sufficient to convert a same amount of unprocessed water into steam. In addition, the solar thermal collector of the subsequent distillation panel will also add heat to the water, and therefore the subsequent distillation panel will produce considerable more steam as the earlier (upstream) distillation panel.

As will be appreciated, in reality the amount of steam produced will be diminished by certain factors in the system and process. For example, the conversion of salty or contaminated water into steam requires more energy than boiling clean water, due to for example the energy required to release the bonding between water and salt molecules, i.e. the distillation process itself. In case the water to be processed is seawater, the salinity may vary dependent on the local situation, although it will mostly vary between 3,1% to 3,8% (i.e. between 31 g/l and 38 g/l). In that case, the difference in latent heat (i.e. evaporation heat) between the seawater to be distilled and the steam to be condensed again will be a few per cent, e.g. typically 2,5%-3%. Moreover, energy loss may occur elsewhere in the system - although this may be controlled e.g. by insulation and system design, as will be discussed later.

In a system in accordance with the invention with $N$ distillation panels that are all interconnected in the manner described above, in theory each panel will multiply the yield of steam of all of the panels before, while also adding an additional amount of steam. For example, assuming identical distillation panels, if a single such distillation panel would produce an amount of steam S, then five distillation panels interconnected in a serial chain as described above will theoretically produce the following amounts of steam:

- the first unit produces an amount of steam $S$;
- the second unit produces an amount of steam $2 \cdot S$;
- the third unit produces an amount of steam $3 \cdot S$;
- the fourth unit produces an amount of steam $4 \cdot S$;
- the fifth unit produces an amount of steam $5 \cdot S$.

In view of the above, the amount of steam produced by $N$ distillation panels interconnected as indicated herein may be as large as:

$$\tfrac{1}{2} \cdot N \cdot (N+1) \cdot S. \qquad\qquad (\text{eq. 1})$$

The amount of steam produced by the system per panel will thus be increased to $((N+1)/2) \cdot S$, whereas this is equal to $1 \cdot S$ per panel in a conventional setting wherein the distillation panels are not interconnected. The additional yield, even if energy losses and chemical processes of the distillation are taken into account, will be considerably higher than in a conventional distillation plant.

As will be appreciated the distillation plant of the present invention may advantageously be used in a desalinisation plant for producing fresh water in arid areas that have access to sea water or brackish water.

In accordance with an embodiment of the invention, for at least one or each of said $N$ distillation panels, the solar thermal collector comprises a return channel for returning a liquid fraction exiting the solar thermal collector back to the water inlet for reprocessing said liquid fraction. The use of a return channel in combination with the heat exchanger unit in the $n$th distillation panel considerably increases the efficiency of the heat exchange process and of the conversion of water into steam. Due to the return channel, the liquid fraction that is not converted into steam is returned to the second channel of the heat exchanger. This will establish a circulation flow of liquid unprocessed water, to which the water from the water inlet is added. As a result of the flow of water in the second channel, heat transfer from the first to the second channel will take place more efficient. This benefits both the heating of water in the second channel as well as the condensation of steam in the first channel. Moreover, forced convection and steam bubbles will push the water and steam through the solar thermal collector of the distillation panel.

A particular efficient heat exchanger for the above purpose, is obtained in accordance with a further embodiment of the invention. In this embodiment, the second channel of the heat exchanger unit of said $n$th distillation panel extends concentrically around the first channel such as to enclose the first channel, the channels together forming a pipe in a pipe arrangement. This construction is in particular suitable for exchanging the evaporation heat (or latent heat) from the condensation process in the first channel to the heating of water in the second channel.

Moreover, in accordance with a further embodiment, the second channel connects to a plurality of collector channels of said solar thermal collector of said $n$th distillation panel, said collector channels extending from a plurality of locations distributed across a longitudinal direction of the second channel of the heat exchanger unit. In this embodiment, in particular where it is combined with the pipe-in-pipe type heat exchanger of the embodiment described above, heated water is straightforwardly sucked into the solar thermal collector as a result of the forced convection and two-phase steam-water slug flow established in the collector.

For at least one or each of the $N$ distillation panels in a distillation plant of the present invention, in accordance with another embodiment the water inlet comprises a level regulation unit for maintaining a level of the liquid fraction in the solar thermal collector of each panel. The level regulation unit may be a float type valve installed in a closed container. Moreover, the steam outlet may, in a further embodiment, comprise a vapour separation unit that prevents liquid from leaving the panel.

The distillation plant, in accordance with a preferred embodiment comprises a vacuum pump upstream of the water outlet. Using the vacuum pump, pressure in the condensed water outlet channel upstream of the vacuum pump is maintained at a desired low level. Although this pressure may be as low as desired, the operational pressures in the distillation plant may be kept between -0,5 bar and 0,5 bar. In this pressure range, the legal requirements for certification of the equipment are usually more lenient.

The vacuum pump in cooperation with the level regulation units in the respective panels, causes the establishment of an equilibrium within the distillation plant. Running of the process in the distillation plant is then only subject to powering of the vacuum pump. Due to the established equilibrium, the pressures established in the respective distillation panels are such that the distillation processes in the solar thermal collectors and heat exchanger units and the heat transfer within between various panels and phases takes place in the most efficient manner. The low pressure at the outlet allows efficient removal of condensed water, thereby allowing removal of steam, thereby lowering the level of the liquid water fraction in each panel, thereby opening the float type level regulation unit. Conversion of steam into water is achieved in the first channel of the $n$th distillation panel: if the temperature difference is too small this process may be inefficient $\rightarrow$ this leads to a rise of pressure in the first channel and the $(n-1)$th distillation panel since steam is continued to be produced there. The pressure rise in the $(n-1)$th distillation panel results in a rise of the boiling temperature; therefore the temperature in the first channel will rise such that an equilibrium temperature difference is maintained. Since this equilibrium is established between each two interconnected panels in the system, the equilibrium will establish throughout the system.

In accordance with a further embodiment of the present invention, a condense water heat exchanger may be arranged upstream of the water inlet of said $(n-1)$th distillation panel, said condense water heat exchanger connected to the steam trap of said $n$th distillation panel for receiving condensed water from the steam trap for transferring heat to said water for said water inlet of the $(n-1)$th distillation panel. As will be appreciated, after leaving the steam trap, the condensed fresh water will still be at or near the condensation temperature. The condense water heat exchanger will cool the condensed fresh water while at the same time pre-heating the water offered to the water inlet of the $(n-1)$th distillation panel. The skilled person will appreciate that this heat may likewise be applied elsewhere in the system, not necessarily for heating the water provided to the $(n-1)$th distillation panel. However, the $(n-1)$th distillation panel will be a convenient location for exchanging the heat. The amounts of water in and out are ,ore or less the same and it usually close to the steam trap of the $n$th distillation panel in a system where the $n$th and the $(n-1)$th distillation panel are interconnected as described above.

In accordance with a further embodiment of the present invention, the distillation plant further comprises a water tower receiving in use water from a water intake, for providing said water to one or more of said water inlets of said $N$ distillation panels. The water intake may be located at a water source or repository from which the water to be distilled is obtained, for example: a coastal water intake for taking in seawater, a water intake in a lake or other natural source of water, or a water intake for taking in industrial or polluted water, or precipitation. The skilled person will recognise the various kinds of water sources that may be used for obtaining the water to be processed.

The use of a water tower enables to maintain a sufficiently high and constant base pressure for feeding water to the distillation plant. It also provides a further opportunity to exchange heat between the various streams of water and steam in the system. For example, and in accordance with a further embodiment, the steam outlet of the $N$th distillation panel of the $N$ panels (i.e. the last distillation panel of the $N$ panels) is connected to a pre-heat exchanger unit within said water tower for transferring heat from steam in the steam outlet of the $N$th distillation panel to water in the water tower. Again, a steam trap at the other end of the pre-heat exchanger (i.e. the end which is downstream of the steam outlet and the heat exchanging parts) will allow for efficient transfer of evaporation heat (latent heat) from the steam to the water in the water tower. If all distillation panels are interconnected, this will ideally generate a further amount of steam $N \cdot S$ where $S$ is the amount of steam produced by the first distillation panel and $N$ is the number of interconnected distillation panels in series in the manner described herein. This steam may be collected using a condensed water collector unit installed in the water tower, e.g. a roof construction including a gutter for collecting condensed water from the roof of the water tower for providing said distilled water.

In view of the above, if all distillation panels are interconnected in a manner described above (steam from the 1st panel is transferred within the 2nd panel, steam from the 2nd panel is transferred within the 3rd panel, ....., steam from the $(N-1)$th panel is transferred within the $N$th panel) and an additional amount of steam $N \cdot S$ is obtained in the water tower, ideally the total amount of steam produced is:

$$(\tfrac{1}{2} \cdot N \cdot (N+1) + N) \cdot S \qquad\qquad (\text{eq. 2})$$

Normalizing for $S$ (i.e. taking $S=1$), the amount of steam produced per panel will be

$$(N/2 + 1,5) \qquad\qquad (\text{eq. 3})$$

times as much as compared to the amount of steam per panel of conventional panels that are not interconnected.

As will be appreciated, even though many examples provided in this application will be based on a distillation plant wherein the $N$ distillation panels are all interconnected as indicated, the invention is not limited thereto. In different embodiments only a part of the $N$ panels may be connected, or even in other embodiments the N panels may be interconnected in series of a fixed number of panels (e.g. three series of five interconnected panels). Also the number of panels N may be different for various embodiments. The number $N$ may for example range from $2 \le N \le 50$ panels, preferably $2 \le N \le 30$, and even more preferably $2 \le N \le 17$ ($N \in \mathbb{N}$).

In accordance with a second aspect of the invention, there is provided a desalinisation plant for gaining drinking water, said desalinisation plant comprising at least a distillation plant in accordance with the first aspect of the invention as described above, wherein the water to be processed is water containing one or more concentrations of dissolved minerals, such as seawater. As will be appreciated, the present invention may advantageously be used in costal areas with a lack of fresh water useable as drinking water, e.g. near deserts or in densely populated areas with lack of natural fresh water sources.

In accordance with a third aspect of the invention, there is provided a method of distilling water using a plurality of $N$ distillation panels, wherein $N \in \mathbb{N}$ $N$ and $N \ge 2$, said method comprising a step of: using a solar thermal collector in each distillation panel of said $N$ distillation panels for converting water received through a water inlet of said panel to steam, wherein said steam is provided to a steam outlet of said panel; and the method further comprising the steps of, for one or more $n$ and $1 < n \le N$: providing steam from the steam outlet of the $(n-1)^{\text{th}}$ distillation panel a first channel of a heat exchanger unit of the $n^{\text{th}}$ distillation panel; providing water from the water inlet of the $n^{\text{th}}$ distillation panel to a second channel of the heat exchanger unit of the $n^{\text{th}}$ distillation panel; using a steam trap at a downstream end of the first channel relative to the steam outlet of the $(n-1)^{\text{th}}$ distillation panel for providing condensed distilled water to a water outlet.

Brief description of the drawings

Without limitation to the specific examples described, the invention will further be elucidated by means of such specific examples and embodiments, and with reference to the enclosed drawings, wherein:

figure 1 schematically illustrates a desalinisation plant comprising a distillation plant in accordance with the present invention;
figure 2 schematically illustrates a distillation panel in a distillation plant in accordance with the present invention;
figure 3 schematically illustrates a solar thermal panel, including a heat exchanger unit, in a distillation plant in accordance with the invention;
figure 4 schematically illustrates a method of the present invention.

Detailed description

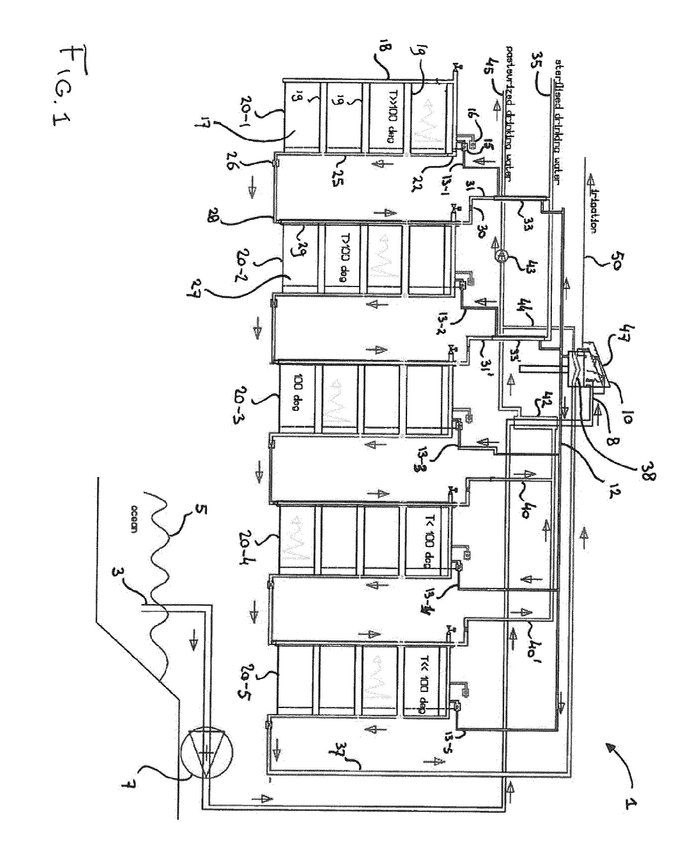

A desalinisation plant 1 comprising a distillation plant in accordance with the present invention is schematically illustrated in figure 1. The desalinisation plant comprises a water intake 3 that uses a pump unit 7 to pump salt water from the ocean 5. As will be appreciated, instead of desalinisation of seawater, a similar distillation plant may be used for purifying water from any suitable source by means of distillation.

Pump unit 7 provides the water to the inlet 8 of a water tower 10. The primary function of water tower 10 is to establish a large enough and more or less constant pressure at the inlet of the distillation system. As may be appreciated, other alternatives are available for pressurizing the water upstream of the distillation process. However, the use of a water tower is convenient in the sense that the construction of such a tower is well known and straightforward, and it may therefore be built anywhere. Moreover, it requires only little maintenance, and only the energy of the pumping unit is required for providing the water to the tower. The water tower 10 also allows to perform a number of pre-processing and post-processing steps, as will be explained below.

From the water tower 10, water to be processed is provided via a distribution pipe 12 to a plurality of water inlets 13-1, 13-2, 13-3, 13-4, and 13-5 of five different distillation panels 20-1, 20-2, 20-3, 20-4, and 20-5 respectively. In the example of figure 1, the system comprises five distillation panels 20-1 through 20-5. However, as described already above, the system may comprise any other number of distillation panels dependent on, for example, the needs.

Focussing on the first distillation panel 20-1 of the plant 1, the water inlet 13-1 connects to a level regulation unit 15 of the panel 20-1. The level regulation unit 15 may be implemented as a float type valve installed within a closed container. As soon as the liquid level in the panel 20-1 drops below a threshold, the float 15 opens and water to be process is fed into distillation panel 20-1. Downstream the level regulation unit 15 panel 20-1 comprises an overpressure and bleeding valve 16, to allow bleeding of the system and to prevent dangerous pressure built-up.

From the water inlet 13-1, downstream the elements 15 and 16, the water to be processed flows into channel 18 of solar thermal collector 17 of distillation panel 20-1. From channel 18, a plurality of radiation collector channels 19 transversely extend towards an exit channel 25 of the solar thermal panel 17 - in figure 1, for illustrative purposes only three of these radiation collector channels 19 are shown, but the skilled person will appreciate there could be many of such channels, even the whole panel could be mounted as a multi channel panel. In the radiation collector channels 19, solar radiation falling upon the solar thermal collector 17 is received and converted into heat. This heat is absorbed by the water present in the channels 19, which converts into steam. As will be explained below, before entering the distillation panel 20-1, the water is pre-heated along the way, for example by heat exchanger 38 in the water tower 10 and by condense heat exchanger 33 upstream of the inlet 13-1. Moreover, any liquid fraction that may be released from the channels 19 into exit channel 25 may be returned using return channel 22. This liquid water fraction will be boiling temperature (the exact value of which is dependent on the operational pressure in the distillation panel).

The pre-heated water provided to the panel 20-1 through inlet 13-1 will be almost at boiling temperature (as will be explained later). This pre-heated water mixes with the liquid fraction from exit channel 25, flowing back to channel 18 from where it is released again into the radiation collector channels 19. The water temperature throughout the panel 20-1 will be around boiling temperature. The temperature directly downstream the inlet 13-1 will at most differ a few degrees (e.g. 1 -5 degrees) from the boiling temperature reached inside the radiation collector channels 19. The amount of latent heat or evaporation heat to be added to the water such as to convert it into steam may be easily determined using the operation pressure and boiling temperature. As already explained above, the amount of latent heat will be slightly more than the heat required to boil clean fresh water (i.e. distilled water), due to the fact that energy is required to release the bonding between the water molecules and the dissolved contaminations (i.e. minerals).

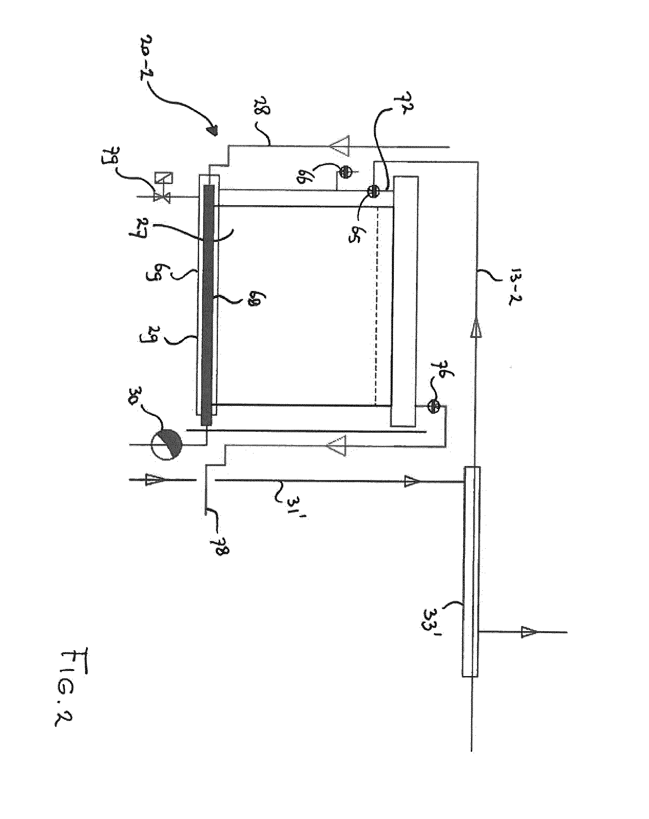

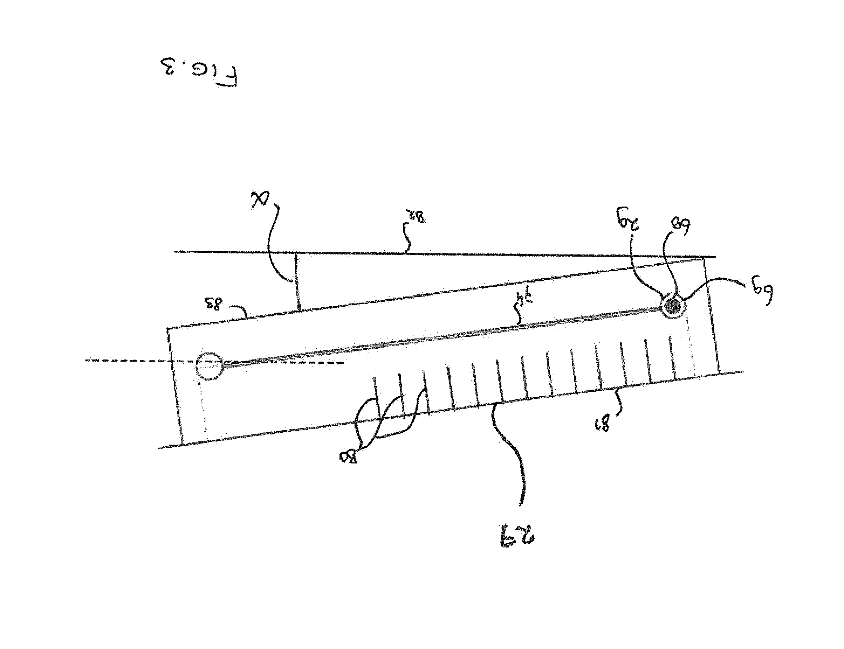

From exit channel 25, the steam fraction is released into transport pipe 28 through float type valve 26. Valve 26 is again selected to be a float type valve such as to avoid unprocessed water entering the distilled water channel (if valve 15 fails for one or other reason. Transport pipe 28 connects the first distillation panel 20-1 with the second distillation panel 20-2, however, only heat is exchanged between the steam fraction coming from distillation panel 20-1 and the water to be processed in distillation panel 20-2. The steam flow from panel 20-1 is kept physically separated from the water in distillation panel 20-2. This is achieved by heat exchanger unit 29 of distillation panel 20-2. This heat exchanger unit 29 consists in the present embodiment of a pipe-in-pipe construction, as for example illustrated in figures 2 and 3. Heat exchanger unit 29 consists of a first channel 68 containing the steam flow and a second channel 69 for the water to be processed. Back to figure 1, at the other end of the heat exchanger unit 29, which is the most remote end of heat exchanger unit 29 downstream of transport pipe 28, the heat exchanger unit is closed by means of a steam trap 30.

Since the amount of steam produced by each subsequent distillation increases considerably, the capacity of the transport system for providing the steam to the next distillation panel preferably also increases with each subsequent panel in order to convey the amount of steam efficiently. This may for example be achieved by proper selection of the diameter of transport pipe 28 of panel 20-1, and to increase the diameter of transport pipes of each subsequent panel of the panels 20-2 through 20-5. Alternatively, the capacity of the transport system may also be obtained by adding additional transport pipes. For example, a shortcut may be made between exit channel 25 and first channel 68 (or, even more preferred, between any such exit channel and first channel in downstream distillation panels), the shortcut comprising an individual float type valve and transport pipe. Or alternatively, transport pipes may be installed side by side, sharing a single float type valve such as valve 26.

Steam trap 30 may be of any suitable type known in industry, although in the present embodiment it has been implemented as an orifice through which condensed water is released into pipe 31. By using a steam trap, such as steam trap 30, it is achieved that steam that is present in the heat exchanger unit 29 condenses into water and leaves the heat exchanger unit 29. As a result, latent heat released in the course of the condensation process is transferred from the first channel 68 to the second channel 69. In channel 69 it is absorbed by the water to be processed. This heat, which is exchanged in heat exchanger unit 29, produces on its own already an almost equal amount of steam in distillation panel 20-2 as the amount produced in distillation panel 20-1; assuming the additional heat used in the distillation of mineral from the water (i.e. for releasing the bond between water molecules and minerals) to be typically a few per cent (2-4%). Solar thermal collector 27 will exchange a similar further amount of heat with the water to be processed by conversion of received solar radiation. As a result, the amount of steam produced in the second distillation panel 20-2 is approximately twice the amount produced in distillation panel 20-1.

The working principle of solar thermal collector 27 is more or less the same as that of solar thermal collector 17 of panel 20-1. Water is received through inlet 13-2, which has been pre-heated in the water tower 10 by means of pre-heat exchanger 38, and by means of condense heat exchanger 33'. This pre-heated water is mixed with water returning through a return channel (not numbered) from a liquid fraction in an exit channel of solar thermal collector 27. Stream produced in distillation panel 20-2 is provided to distillation panel 20-3 in the same way as was done with the steam from distillation panel 20-1 in distillation panel 20-2. This steam condenses and is released through a steam trap (implemented as an orifice) into pipe 31'.

Once condensed, and after regaining as much as possible heat from the condensed water in condense heat exchangers 33 and 33', the water is released to an outflow 35 of the desalinisation plant 1. Since the water has been heated above 100° Celsius, it is released as sterilized distilled water. Although this is completely dependent on the working parameters, part of the water may be distilled in the desalinisation plant 1 at temperatures below 100° Celsius. Such water may be kept separate from the sterilized distilled water, and provided to an outflow 45 of the plant 1 as pasteurized distilled water. This will be completely at the choice of the skilled person, as in principle there is no objection against using both water outputs as clean drinking water. Any original pollution of bacterial or viral type present in the water collected at water intake 3 has been sanitized in the distillation process. Therefore, outflow 35 and outflow 45 may be integrated into a single outflow.

In the embodiment of figure 1, the operational pressure of each distillation panel is lower than the upstream panels: i.e. the operation pressure at panel 20-1 may be the highest (e.g. 1,50 bar), the operation pressure at panel 20-2 may be lower than in panel 20-1 (e.g. 1,25 bar), the operation pressure at panel 20-3 may be lower than in panel 20-2 (e.g. 1 bar), the operation pressure at panel 20-4 may be lower than in panel 20-3 (e.g. 0,75 bar), the operation pressure at panel 20-5 may be lower than in panel 20-4 (e.g. 0,50 bar). This is caused by the equilibrium that is established throughout the system by means of vacuum pump 43 present in the channel upstream the outlet 45. The vacuum pump establishes a low enough pressure in the channel such that condensed water is efficiently removed. The pressures between each two interconnected panels will establish an equilibrium due to the fact that heat transfer between the first and second channel 68 and 69 must be such that sufficient condensation takes place. If not, the pressure, and thereby the temperature, in the first channel 68 will rise while increasing the temperature difference between first channel 68 and second channel 69. This will improve the heat transfer, accelerating condensation, until an equilibrium is established. This allows the plant to be self-operated without the requirement of many additional pump units other than pump 43 in the system. In the desalinisation plant 1 of figure 1, only two pump units 7 and 43 have been installed. Pump unit 43 is the vacuum pump for releasing the distilled condensed water coming from distillation panels 20-3, 20-4 and 20-5 which all operate at a pressure below the ambient atmospheric pressure. The vacuum pump 43 may be installed further downstream near the outlet 45 if desired. The pressure provided may be as low as desired, although it must be sufficiently high to prevent cavitation within the pump (this may result in damage). A low pressure results in lower boiling temperatures and more efficient heat transfer within the solar thermal panels. Although -0,5 bar is not the technical lower limit, preferably, for releasing some constraints on the equipment in view of safety regulations, the pressures within the system may be kept between -0,5 bar and 0,5 bar.

Condensed water from distillation panels 20-3 and 20-4 is used to preheat water directly coming from water intake 3 of the plant. There are several reasons for implementing the condense heat exchanger 42 of panels 20-3 and 20-4 on the (cold) water intake channel. It is to be realised that in the embodiment of the plant 1 illustrated, the panels 20-3, 20-4 and 20-5 are operated at pressures that do not exceed the atmospheric pressure. The boiling temperature in panel 20-3, and thus in pipe 40, will be approximately 100° Celsius, while in panels 20-4 and 20-5 it is below 100° Celsius. Heat from condensed water in pipe 40' from panel 20-4 may thus be optimally exchanged with the cold water intake channel. The heat from panel 20-5 is regained in an even different manner. Since distillation panel 20-5 is the last panel in the plant, steam from this panel cannot be provided to a subsequent panel. This steam is therefore provided as input to the pre-heat exchanger 38 in the water tower 10, which is on the downstream end (i.e. the end downstream of the heat exchanger parts) closed by a steam trap (not shown). Condensed water from the steam trap may also be used as input to a further pre-heat exchanger (not shown) to regain the last bit of excess heat therefrom. The distilled water is then provided via pipe 44 to the outflow 45 of the desalinisation plant 45. Moreover, the pre-heat exchanger 38 will already generate and amount of steam within the water tower 10. This steam rises up to the roof of the water tower 10 where it is collected by using a condense water collector 47, i.e. a suitable construction of the roof from which condensed droplets are collected in a gutter. This water is provided via an outflow 50 for use as irrigation water.

As indicated above for the transport systems between subsequent distillation panels, also the transport capacity of the solar thermal panels will increase for each subsequent distillation panel further downstream. For example in a prototype set-up the diameter of the collector channels 19 of the first distillation panel were designed having a diameter of 6mm, while the collector channels of the fifth distillation panel had a diameter of 8mm to be able to efficiently transport the larger amounts of water/steam mixture. The diameters required for the collector channels of each solar thermal collector are to be calculated carefully, taking into account the expected amount of steam and water to be processed by the solar thermal collector. To this end, also the flow characteristics of the two-phase flow are to be taken into account. Test have been performed wherein the two-phase flow was typically a slug flow. This type of flow efficiently forces the water through the solar thermal collector, driven by the forces of convection and of bubble buoyancy. Also for higher flow velocities, where the flow turns to the churn flow regime or maybe even annular dispersed flow, heat transfer is expected to be sufficient. At lower flow velocities, the two-phase flow typically turns to a bubble flow regime. In this regime, if the heat convection process is still strong enough, the water will efficiently take up heat from the solar thermal collector. If however the diameter of the collector channels becomes too large, the liquid fraction may not flow (or not sufficient) and heat from the solar thermal collector and heat exchanging pipe 68 may not efficiently be transferred to the water. This will not only hinder the production of steam; it may also damage the solar thermal collector. As will be appreciated, the most optimal diameter of the collector channels for each panel 20-1 through 20-5 will be dependent on the situation, and may be calculated by taking the above considerations into account.

Figure 2 is another schematic drawing providing a close-up of distillation panel 20-2. Those parts that may also be visible in figure 1, which are indicated therein with reference numerals, have received the same reference numerals in figure 2 and in any of the other figures throughout this application. Therefore, from figure 2, the water inlet 13-2, condense heat exchanger 33', condensed water pipe 31', solar thermal collector 27, transport pipe 28 (coming from panel 20-1), steam trap 30, and heat exchanger unit 29 are illustrated in figure 2. The heat exchanger unit 29, as indicated above, consists of a first channel 68 receiving steam from panel 20-1, and a second channel 69 receiving water to be processed. No radiation collector channels are shown in solar thermal panel 27, however, such channels may be similar to the channels 19 of solar thermal collector 17 and are considered known to the skilled person.

Figure 2 also shows the return channel 72 providing the liquid fraction back to the entrance of the solar thermal panel. The benefit of using a return channel in the distillation panels 20-1 through 20-5 in accordance with the present invention, is that it creates a system wherein all fluids in the distillation panel are circulated powered by forced convection in the radiation collector channels. Inside these channels, a two-phase flow is established consisting of pockets of water at boiling temperature and slug type bubbles. These bubble typically have the approximate diameter of the channel, and usually have a bullet-like shape. Water in front of these bubbles is forced up through the channel, and part of that water ends as the liquid fraction in the exit channel (which is of larger diameter to separate the steam from the water and allow transportation of both). The liquid fraction is then returned via return channel 72, while the steam fraction exits the distillation panel 20-2 through float type valve 76 into transport pipe 78 towards the heat exchanger unit (not shown) of panel 20-3 (see figure 1).

In figure 2, the level regulation unit is indicated by reference numerals 65, and the overpressure and bleeding valve is indicated by 66. Valve 79 may be used for security reasons, and for purging the system over night to release salt fractions from the system.

Another schematic cross section of distillation panel 20-2 is shown in figure 3. Figure 3 shows the heat exchanger unit 29, the first channel 68, and the second channel 69. From figure 3, it can be seen that the solar thermal collector 27 is placed under an inclination angle $\alpha$ between the bottom 83 and the horizontal surface 82 on which it is placed. This angle is chosen such as to most efficiently receive the solar radiation throughout the day. Usually, installing the solar thermal collector 27 (and the other solar thermal collectors) such that $\alpha \approx\ < 30°$ will be efficient. Moreover, to prevent energy loss within the solar thermal collector itself due to convection stimulated air circulation, a plurality of partitions 80 may extend at least partially into the space between cover 81 and the radiation collector channels 74. This prevents a circulation flow to be established.

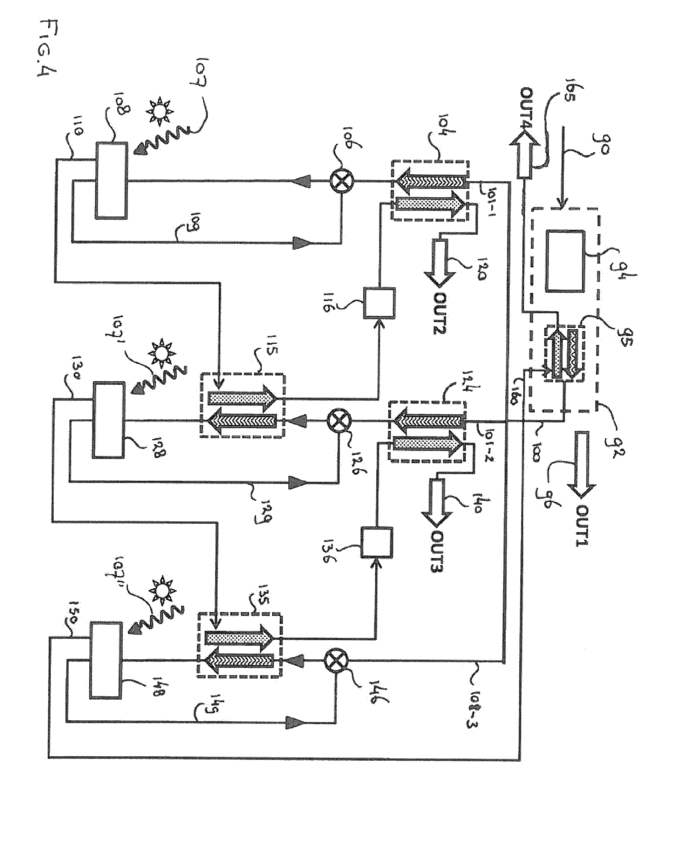

A method of the present invention is schematically illustrated in figure 4. The method is explained with reference to an embodiment wherein water is distilled using three distillation panels. As will be appreciated, the number of distillation panels may be increased or decreased as desired under the circumstances given, and is not confined to any specific number provided in this disclosure.

In figure 4, water from a water intake is provided in step 90 to a water tower (schematically indicated by dashed box 92). Using the water tower, the water is pressurized in step 94. The method further comprises a step of pre-heating (step 95). The steps 94 and 95 are both applied inside or using the water tower, i.e. at the same time, and therefore no conclusion is to be drawn from the specific order of appearance of these steps in figure 4 or the present description. The pre-heating step 95 causes a fraction of steam to be produced inside the water tower 92, schematically indicated by arrow 96 and provided as output OUT1 of the present method.

The pre-heated water is then distributed in step 100 amongst several distillation panels. In step 101-1 a fraction of the water is fed into a first distillation panel, in step 101-2 a fraction of the water is fed into a second distillation panel, and in step 101-3 a fraction of the water is fed into a third distillation panel. In the first distillation panel, the water is led in step 104 through a condense heat exchanger where it is further heated such that a temperature just below boiling temperature is reached. As will be appreciated, boiling is to be prevented prior to step 106 to prevent blocking of the ingress water pipes (this may cause damage to the system in case the water cannot reach the solar thermal collectors). In step 106, the heated water from the inlet is mixed with return water from the solar thermal collector, and provided back to the entrance of the solar thermal collector.

In step 108, the water is further heated by means of solar radiation 107 in a solar thermal collector. The liquid fraction of water that leaves the solar thermal collector is provided in step 109 via a return channel to the mixing step 106 described above. The steam fraction is transported in step 110 to a heat exchanging step 115 which takes place in the second distillation panel. In the heat exchanging step 115 the steam is condensed back to water, releasing its latent heat or evaporation heat. In step 116, steam is separated from condensed water in a steam trap, and the steam is kept within the heat exchanging process step 115 while the condensed water is provided as input to the condense heat exchanging step 104 described above. Then, in step 120, the water is provided as output of the distillation method (OUT2).

In the second distillation panel, the water received in step 101-2 is led in step 124 through a condense heat exchanger where it is further heated such that a temperature just below boiling temperature is reached. As will be appreciated, boiling is to be prevented prior to step 126 to prevent blocking of the ingress water pipes (this may cause damage to the system in case the water cannot reach the solar thermal collectors). In step 126, the heated water from the inlet is mixed with return water from the solar thermal collector, and provided back to the entrance of the solar thermal collector.

Heat exchanger step 115 described above is performed at the entrance of the solar thermal collector step 128, and will produce an amount of steam that is almost equal to the amount of steam produced in step 108 in the first distillation panel. In step 128, water that is still in the liquid phase is further heated by means of solar radiation 107' in a solar thermal collector. The liquid fraction of water that leaves the solar thermal collector is provided in step 129 via a return channel to the mixing step 126 described above. The steam fraction is transported in step 130 to a heat exchanging step 135 which takes place in the third distillation panel. In the heat exchanging step 135 the steam is condensed back to water, releasing its latent heat (evaporation heat). In step 136, steam is separated from condensed water in a steam trap, and most steam is kept within the heat exchanging process step 135 while condensed water is provided as input to the condense heat exchanging step 124 described above. Then, in step 140, the water is provided as output of the distillation method (OUT3).

In the third distillation panel, the water received in step 101-3 from the inlet is mixed in step 146 with return water from the solar thermal collector, and provided back to the entrance of the solar thermal collector. Between steps 101-3 and 146, in the present embodiment, no condense heat exchanger is present. However, such a condense heat exchanging step may be implemented in an alternative embodiment by using, for example, condense water released from a steam trap of heat exchanging step 95 in the water tower.

Heat exchanger step 135 described above is performed at the entrance of the solar thermal collector step 148, and will produce an amount of steam that is almost equal to the amount of steam produced in the second distillation panel. In step 148, water that is still in the liquid phase is further heated by means of solar radiation 107" in a solar thermal collector. The liquid fraction of water that leaves the solar thermal collector is provided in step 149 via a return channel to the mixing step 146 described above. The steam fraction is transported in step 150 to the inlet 160 of the pre-heat exchanging step 95 which takes place in the water tower 92. In the heat exchanging step 95 the steam is condensed back to water, releasing its latent heat or evaporation heat. A steam trap may be present at the outflow of pre-heat exchange step 95, to release condensed water. This condensed water may be led back through a further heat exchanging step (not shown) to provide any excess heat back to the process (e.g. to the tower 92, or to an optional condense heat exchanging step within the third distillation panel. In step 165, the water is provided as output of the distillation method (OUT4). The total output of purified water by the present method is the sum of OUT1, OUT2, OUT3, and OUT4.

The present invention has been described in terms of some specific embodiments thereof. It will be appreciated that the embodiments shown in the drawings and described here and above are intended for illustrative purposes only, and are not by any manner or means intended to be restrictive on the invention. The context of the invention discussed here is merely restricted by the scope of the appended claims.

**Claims**

1. Distillation plant for gaining distilled water, said plant comprising a plurality of $N$ distillation panels, wherein $N \in \mathbb{N}$ and $N \geq 2$, wherein each distillation panel comprises:

   a water inlet for receiving water to be processed;
   a solar thermal collector for converting the received water to steam; and
   a steam outlet;
   wherein for one or more $n$ and $1 < n \leq N$ :

the $n^{th}$ distillation panel of the $N$ panels comprises a heat exchanger unit, which heat exchanger unit comprises a first channel for receiving steam and a second channel connected to the water inlet of the $n^{th}$ panel for receiving water to be processed;
wherein the steam outlet of the $(n-1)^{th}$ distillation panel is connected to the first channel of the heat exchanger unit of the $n^{th}$ distillation panel; and
wherein the first channel of the heat exchanger unit of the $n^{th}$ distillation panel further comprises a steam trap at a second end downstream of said steam outlet of the $(n-1)^{th}$ distillation panel, for providing condensed distilled water to a water outlet.

2. Distillation plant in accordance with claim 1, wherein for at least one or each of said $N$ distillation panels, the solar thermal collector comprises a return channel for returning a liquid fraction exiting the solar thermal collector back to the water inlet for reprocessing said liquid fraction.

3. Distillation plant according to any one or more of the previous claims, wherein the second channel of the heat exchanger unit of said $n^{th}$ distillation panel extends concentrically around the first channel such as to enclose the first channel, the channels together forming a pipe in a pipe arrangement.

4. Distillation plant according to claim 3, wherein the second channel connects to a plurality of collector channels of said solar thermal collector of said $n^{th}$ distillation panel, said collector channels extending from a plurality of locations distributed across a longitudinal direction of the second channel of the heat exchanger unit.

5. Distillation plant in accordance with any one or more of the previous claims, further comprising a vacuum pump upstream of said water outlet.

6. Distillation plant in accordance with any one or more of the previous claims, wherein for at least one or each of the $N$ distillation panels, the water inlet comprises a level regulation unit for maintaining a level of the liquid fraction in the solar thermal collector of each panel.

7. Distillation plant in accordance with any one or more of the previous claims, wherein the steam outlet further comprises a vapour separation unit that prevents liquid from leaving the panel.

8. Distillation plant in accordance with any one or more of the previous claims, wherein a condense water heat exchanger is arranged upstream of the water inlet of said $(n-1)^{th}$ distillation panel, said condense water heat exchanger connected to the steam trap of said $n^{th}$ distillation panel for receiving condensed water from from the steam trap for transferring heat to said water for said water inlet of the $(n-1)^{th}$ distillation panel.

9. Distillation plant in accordance with any one or more of the previous claims, wherein said distillation plant further comprises a water tower receiving in use water from a water intake, for providing said water to one or more of said water inlets of said $N$ distillation panels.

10. Distillation plant in accordance with claim 9, wherein said steam outlet of the $N^{th}$ distillation panel of the $N$ panels, which constitutes the last distillation panel of the $N$ panels, is connected to a pre-heat exchanger unit within said water tower for transferring heat from steam in the steam outlet of the $N^{th}$ distillation panel to water in the water tower.

11. Desalinisation plant for gaining drinking water, said desalinisation plant comprising at least a distillation plant in accordance with any one or more of the previous claims, wherein the water to be processed is water containing one or more concentrations of dissolved minerals, such as sea water.

12. Method of distilling water using a plurality of $N$ distillation panels, wherein $N \in \mathbb{N}$ and $N \geq 2$, said method comprising a step of:

using a solar thermal collector in each distillation panel of said $N$ distillation panels for converting water received through a water inlet of said panel to steam, wherein said steam is provided to a steam outlet of said panel; and the method further comprising the steps of, for one or more $n$ and $1 < n \leq N$ :

providing steam from the steam outlet of the $(n-1)^{th}$ distillation panel a first channel of a heat exchanger unit of the $n^{th}$ distillation panel;
providing water from the water inlet of the $n^{th}$ distillation panel to a second channel of the heat exchanger unit of the $n^{th}$ distillation panel;

using a steam trap at a downstream end of the first channel relative to the steam outlet of the $(n-1)^{th}$ distillation panel for providing condensed distilled water to a water outlet.

13. Method according to claim 12, further comprising a step of returning a liquid fraction exiting the solar thermal collector of any one or more of said $N$ distillation panels back to the water inlet of said respective distillation panel for reprocessing said liquid fraction by said distillation panel.

14. Method according to any one or more of the claims 12 and 13, wherein pressure is regulated upstream of the water outlet using a vacuum pump.

FIG. 1

FIG. 2

FIG. 3

FIG.4

Europäisches
Patentamt
European
Patent Office
Office européen
des brevets

**EUROPEAN SEARCH REPORT**

Application Number

EP 13 18 1257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 862 692 B2 (HONG JEONG-HO [KR]) 4 January 2011 (2011-01-04) * column 3, line 23 - column 5, line 35 * * column 2, lines 47-49 * * figures 1-2 * | 1-14 | INV. B01D1/00 B01D3/06 C02F1/14 |
| X | WO 93/16004 A1 (SCHIESTL ADOLF [AT]) 19 August 1993 (1993-08-19) * pages 2-3 * * figure 1 * | 1,12 | |
| A | EP 1 572 313 A1 (KBH ENGINEERING GMBH [DE]) 14 September 2005 (2005-09-14) * figure 2 * | 1-14 | |
| A | US 4 318 781 A (IIDA TOMIMARU) 9 March 1982 (1982-03-09) * figure 1 * | 1-14 | |

TECHNICAL FIELDS
SEARCHED      (IPC)

B01D
C02F

The present search report has been drawn up for all claims

| Place of search | Date of completion of the search | Examiner |
|---|---|---|
| The Hague | 4 February 2014 | Thibault, Valerie |

**ANNEX TO THE EUROPEAN SEARCH REPORT
ON EUROPEAN PATENT APPLICATION NO.**                 EP 13 18 1257

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2014

| Patent document cited in search report | | Publication date | Patent family member(s) | | Publication date |
|---|---|---|---|---|---|
| US 7862692 | B2 | 04-01-2011 | US | 2008017326 A1 | 24-01-2008 |
| | | | WO | 2006068405 A1 | 29-06-2006 |
| WO 9316004 | A1 | 19-08-1993 | AT | 397078 B | 25-01-1994 |
| | | | AU | 3337393 A | 03-09-1993 |
| | | | WO | 9316004 A1 | 19-08-1993 |
| EP 1572313 | A1 | 14-09-2005 | AT | 408441 T | 15-10-2008 |
| | | | AU | 2003296621 A1 | 14-07-2004 |
| | | | CN | 1729037 A | 01-02-2006 |
| | | | DE | 10260494 B3 | 05-02-2004 |
| | | | EP | 1572313 A1 | 14-09-2005 |
| | | | ES | 2314291 T3 | 16-03-2009 |
| | | | JP | 4621943 B2 | 02-02-2011 |
| | | | JP | 2006511325 A | 06-04-2006 |
| | | | PT | 1572313 E | 19-12-2008 |
| | | | RU | 2336924 C2 | 27-10-2008 |
| | | | US | 2006113179 A1 | 01-06-2006 |
| | | | WO | 2004056442 A1 | 08-07-2004 |
| US 4318781 | A | 09-03-1982 | NONE | | |

EPO FORM P0459

For more details about this annex : see Official Journal of the European Patent Office, No. 12/82